(19) Europäisches Patentamt
European Patent Office
Office européen des brevets

(11) **EP 1 606 554 B1**

(12) **EUROPEAN PATENT SPECIFICATION**

(45) Date of publication and mention
of the grant of the patent:
**07.11.2007 Bulletin 2007/45**

(21) Application number: **04722633.7**

(22) Date of filing: **23.03.2004**

(51) Int Cl.:
*F23J 15/08* (2006.01)    *B01D 53/74* (2006.01)

(86) International application number:
**PCT/IT2004/000143**

(87) International publication number:
**WO 2004/085032 (07.10.2004 Gazette 2004/41)**

(54) **METHOD AND DEVICE FOR POLLUTION REDUCTION FROM EXHAUSTS EMISSIONS**

VERFAHREN UND VORRICHTUNG ZUR REDUKTION VON ABGASEMISSIONEN

PROCEDE ET DISPOSITIF DE REDUCTION DE LA POLLUTION DE GAZ D'ECHAPPEMENT

(84) Designated Contracting States:
**AT BE BG CH CY CZ DE DK EE ES FI FR GB GR
HU IE IT LI LU MC NL PL PT RO SE SI SK TR**

(30) Priority: **24.03.2003 WOPCT/IT03/00171**

(43) Date of publication of application:
**21.12.2005 Bulletin 2005/51**

(73) Proprietor: **NoNOx Ltd
London
SW7 2SR (GB)**

(72) Inventors:
• **Abate, Valerio
21047 Saronno (VA) (IT)**

• **Conti, Alberto
20123 Milano (IT)**
• **Bianchi, Maria Michela
20123 Milano (IT)**

(74) Representative: **Crippa, Paolo Ernesto
Jacobacci & Partners S.p.A.
Via Berchet, 9
35131 Padova (IT)**

(56) References cited:
**EP-A- 0 030 982        CH-A- 688 872
DE-A- 19 627 028        DE-A- 19 824 204
US-A- 4 163 430**

EP 1 606 554 B1

**Description**

The disclosed invention relates to a method, an apparatus designed accordingly, to reduce and/or eliminate polluting exhaust components from combustion thermal-generator emissions comprising at least a combustion chamber and at least an fixed exhaust duct, the duct be used to direct exhaust from inside volume to outside volume of said combustion chamber, comprising the steps of:

setting" the pressure value of exhausts inside a predefined range, in at least one section of said fixed duct;

separate gaseous pollutants, in at least one section of said fixed duct.

One of the major problems nowadays in highly populated towns and cities is air pollution.

Air pollution is both to substances mixed with air and to substances that modify air natural components. All these substances are commonly named pollutants. Thus we have to pollutants families: direct pollutants and indirect pollutants.

Direct pollutants are typically divided in gaseous pollutant and solid pollutants. As example some direct pollutants are those substances able to modify air oxygen turning it from its bi-atomic molecular state to a modified tri-atomic state (named ozone). This behavior was originated by exhaust emissions.

In order to reduce pollution and its related damages, the inventors identified pollution sources and thus proper technological intervention for each of the sources was addressed. All of the pollution sources are those that emits gaseous and solid particles in air, they are vehicles, buildings and industrial plants.

The solutions used to reduce the pollutants released in air, their effects on health are different according to type of pollution source, type of pollutant and historical period.

At the beginning the attention was towards the reduction of some pollutants from industrial plants, see as example patent US 5,879,645 that discloses a catalyst and related method to reduce nitrogen oxides from industrial emissions. With emissions they refer principally to combustion exhausts.

Consequently similar solution was applied to a different field such as vehicles, specifically cars, trucks etc.

Effectively, in patent US 5,879,645 a catalyst and related method are applied according to the same scheme to vehicles exhaust. The introduction of catalyzed mufflers allowed reducing drastically pollutants from vehicles.

Nevertheless, is was observed that all these solutions able to reduce pollutants and emissions from industrial plants and internal combustion vehicles are not enough to reduce pollution especially in big cities.

As we anticipated at the beginning it is necessary to reduce pollutants from buildings, too. Residential density contributes substantially to polluting emissions in air mainly due to heating systems and to hot water production systems installed in residential buildings and offices.

Emission reduction is thus mainly related to the reduction of pollutants directly at the source through the introduction of dedicated devices. In order to have a clear advantage it is necessary to install such pollution reducing system on the most of vehicles and residential buildings. Nowadays most developed countries have regulations that forces automobile producers to sell cars with emission reduction devices to meet specific reduction targets. The mean automobile age made it possible to had the most of circulation cars, which did not adopt such devices, substituted by new existing low emission ones. Unfortunately the residential building situation is different; mean residential building age is so long compared to automobile one that it is not possible to imagine, even in case of regulation similar to automotive field, a fast substitution of the existing device with new ones with low emission profiles. In such case the solutions devoted to residential buildings should be: easy to install on existing plants, have a low cost profile in order not to have a great economical impact on building owners, last for a period comparable to the mean maintenance period and timing of buildings. The mean forecasted lasting time for obsolete components is an important parameter; this time is considerably great in civil field compared to automotive field, indeed are more interesting low impact and revamping solution compared to complete new ones that requires reconstructions.

Each Country issues safety and health regulations related to plant safety especially in case of fire or explosion. In an industrial plant, a catalytic device demands for an high temperature thermal regime. The high temperature is reached by burning gas, gasoline, diesel fuel or others. In a civil building the required modifications for such a device are often incompatible with typology of existing rooms or requires modifications of the environment to satisfy fire and safety regulations especially of explosion-proof regulation in case of gas.

Devices to improve air quality are known for closed environments, such devices suck air from outside changing chemically and mechanically their properties, and pumping inside buildings or in vehicles.

DE 196 27 028 A (DEUTZ AG) discloses a method and a device for reducing pollutants in exhaust gases produced by combustion in a heater for a civil building (house or dwell), the apparatus comprises a combustion chamber, a fixed exhaust duct, means for regulating the pressure of exhaust gases passing the duct, means for removing gaseous pollutants and means for separating particulate pollutants in the form of a porous ceramic filter which can be heated by an electric heating element for ignition of retained soot particles and thereby regenerating the filter.

The object of the present invention provides a method and the related device for reduction and/or elimination of pollutants from exhausts produced by combustion thermal generators that should be easily installable in existing buildings, should be of low cost and should be easily configurable and/or customizable.

The object of the present invention provides a method and the related device for reduction and/or elimination of pollutants an apparatus designed accordingly, to reduce and/or eliminate polluting exhaust components from combustion thermal-generator emissions comprising at least a combustion chamber and at least an fixed exhaust duct, the duct be used to direct exhaust from inside volume to outside volume of said combustion chamber, comprising the steps of setting the pressure value of exhausts inside a predefined range, in at least one section of said fixed duct; separate gaseous pollutants, in at least one section of said fixed duct..

The object of the present invention provides a method and the related device for reduction and/or elimination of pollutants an apparatus designed accordingly, to reduce and/or eliminate polluting exhaust components from combustion thermal-generator emissions comprising at least a combustion chamber and at least an fixed exhaust duct, the duct be used to direct exhaust from inside volume to outside volume of said combustion chamber, comprising first devices to set the pressure inside a predefined range, second devices to separate the gaseous pollutants in at least a section of the fixed duct and third devices to separate solid pollutants in at least a section of the fixed duct.

The disclosed method and apparatus to reduce even completely all pollutants types from combustion thermal generator exhausts is applicable to any type of combustion system using different liquid fuels such as kerosene, heavy oil, diesel or gas fuel such as methane, GPL etc.

The object of the present invention provides a method and the related device for reduction and/or elimination of pollutants an apparatus designed accordingly, to reduce and/or eliminate polluting exhaust components from combustion thermal-generator emissions comprising at least a combustion chamber and at least an fixed exhaust duct, the duct be used to direct exhaust from inside volume to outside volume of said combustion chamber characterized in that first, second and third devices are configurable according to a set of parameters, in order to reduce and/or eliminate pollutants from exhausts.

This set of parameters includes as example the exercise conditions, such as external temperature, humidity, position of device components according to the present invention, etc., the fuel typology or the fuels burnt, in the case of a single fixed exhaust duct serving two different combustion chambers burning different fuels and their percentage of use. This situation may occur when in a house the heating unit is running together with the fireplace.

The present invention could be advantageously applied to heaters and new generation heating units, especially those that have forced air flux and not free air suction.

In a further embodiment of the present invention an apparatus and related method is disclosed for reduction and/or elimination of pollutants an apparatus designed accordingly, to reduce and/or eliminate polluting exhaust components from combustion thermal-generator emissions comprising at least a combustion chamber and at least an fixed exhaust duct, the duct be used to direct exhaust from inside volume to outside volume of said combustion chamber characterized in that said first, second and third devices modulars in order to reduce costs and make the installation easy, eventually customizable and make the maintenance the easiest. Furthermore said first, second and third devices are included in the fixed exhaust duct.

Figure 1 represents a scheme for residential heating according to the present invention.

Figure 2 represents an exhaust flow duct according to one configuration of the present invention.

Figure 3 represents an exhaust flow duct according to one configuration of the present invention.

Figure 4 represents an exhaust flow duct according to one configuration of the present invention.

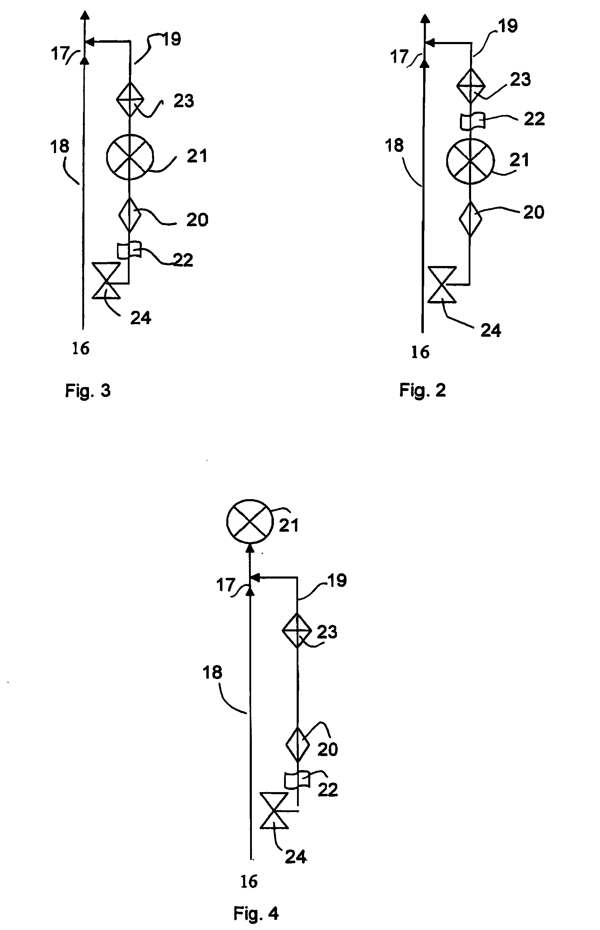

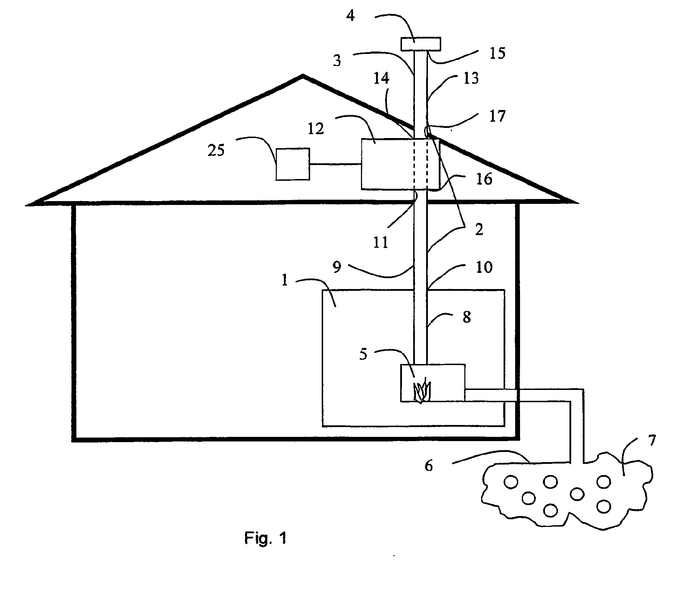

Figure 1 shows an example of the system applied to a house heating including an combustion thermal generator 1 of known type, typically positioned inside the house itself, connected to an apparatus 6 for fuel supply 7 and a exhaust duct 2 able to direct exhaust from thermal generator 1 to outside of the house through an apparatus 12 to reduce and/or eliminate the pollutants from the exhaust produce by thermal generator 1 comprising an inlet 16 and an outlet 17.

The thermal generator 1 comprises a combustion chamber 5 able to burn the fuel 7 to generate heat and a connecting system 8 able to connect the fixed exhaust duct 2 with the combustion chamber 5. The fuel 7 is feed to the combustion chamber by apparatus 6.

Typically the fixed duct 2 ends with a further duct 3 having a device 4 designed to facilitate emission and dilution of exhaust in the atmosphere.

The fixed exhaust duct 2 includes a first part 9 having a first end 10 and a second end 11 and a second part 13 having a first end 14 and a second end 15. First portion 9 of fixed duct 2 is connected to first end 10 to the connecting system 8 and is connected to the second 11 at the inlet 16 of apparatus 12. Second portion 13 of fixed duct 2 is connected to the first end 14 to the outlet 17 of apparatus 12 and with the second end 15 to the vertical duct 3 eventually including the device 4.

In a preferred embodiment the first part 9 is totally include inside the house while the second part 13 is left outside the house below the roof, on the roof. The apparatus 12 according to the present configuration could be left outside the house or eventually in under the roof, nevertheless many configurations are possible that provides inlet 16 inside the house and outlet 17 outside the house in the roof or eventually under the roof, even in the heating unit enclosure.

Figure 2 shows a block diagram of a possible configuration of the apparatus 12 including the inlet 16 for the exhaust from combustion chamber through the section 9 of fixed duct and exit 17 to direct exhaust in the second part 13 of fixed duct 2 itself. From inlet 16 two ducts start first duct 18 and second duct 19. First duct 18 connects directly inlet 16 to outlet 17. Second duct 19 includes a flow control device 24, a filter 20 for solid pollutants filtering, a device 21, connected to flow control device 21 to maintain the exhaust pressure in a duct section 19 inside a predefined value range, a device 22 for the automatic regulation of the exhaust temperature and a filter 23 for the gaseous pollutants decomposition. Second duct 19 connects in parallel to the first duct 18, inlet 16 with outlet 17.

Furthermore apparatus 12 includes an electronic control system 25 comprising a central unit able to regulate the operation of all system components for the heating of a house according to present invention.

Flow control device 24 may be designed as example as a gate valve or a butterfly valve and allows to control the exhaust quantity entering the duct 19 and to control through device 21 exhaust pressure in duct 19. Flow control device 24 is activated by pressure difference between duct 18 and duct 19.

Filter 20 for solid exhaust filtering is composed from two different blocks or if possible a single integrated block. Any filter able to separate solid pollutants such as particles, fumes, and air in general could constitute filter 20. A great advantage is generated by the use of a particle filter using inertial forces generated by particle motion to move particle away from the air flow carrying the particles themselves, as example a cyclone or a similar system. See for example U.S. Patent. 4,895,707; Kuhn, Michael; Jan. 23, 1990; " Soot burn-off filter for diesel engines" ; Daimler-Benz Aktiengesellschaft. In case the aim is to separate particles constituting solid pollutants taking into account their nature and dimensions a gravity filter could be used, see as US Patent 5,294,002; Moses, Darcy; Mar. 15, 1994; "Air separator with spiral staves"; Crown Iron Works Company. In a further embodiment it is possible to install a Coanda effect filter, see as example the patent S.U. A.C. 939079; Borodulya; Jul. 05, 1982; "Method of contaminating particles in gas jets"; Minsk Motor Works and Institute of Heat-and Mass Transfer Lynkov.

In case it is useful to filter out finer particles, such in case of gaseous fuel 7 is used, as example methane, it could be useful to apply an acoustic filter 20, see as example a patent U.S. Patent. 5, 085, 783; Feke, et al.; Feb. 4, 1992; "Acoustically driven particle separation method and apparatus"; Case Western Reserve University.

In any case it is necessary, if an old combustion system is generated, to accelerate the exhaust flow in order to generate enough acceleration to separate carried particles.

Pressurizing unit able to regulate the pressure inside the duct 19 in cooperation with the flow regulator 24 constitutes the device 21. The pressurizing means could be even a piston device at low revolution rate. Better systems are available in alternative such as centrifugal pumps or system using vibrations or shocks (i.e. ultrasounds) to increase slipping in catalyst cavities as described thereafter. Those devices could be used to create inside duct 19 sections in which the exhaust pressure is less than in duct 18.

Filter 23 for the gaseous pollutants filtering includes a catalyst of known type for fume purification.

The formula that describes the catalytic reaction speed (v) is:

$$v = Ak_0 e^{-\frac{E_a}{RT}} c_1 c_2$$

where:

v - is the catalytic reaction speed, $mol \times m^{-3} \times s^{-1}$

A - is the catalytic surface, $m^2$

$k_0$ - is the pre-exponential factor, $m \times mol^{-1} \times s^{-1}$

$E_a$ - is the catalityc reaction activation energy, J/mol (joule per mole)

R - is the universal gas constant = 8.314 J/(mol$\times$K)

T - is the temperature K

$C_1$ - is the reagent 1 concentration, mol$\times$m$^{-3}$

$C_2$ - is the reagent 2 concentration, mol$\times$m$^{-3}$

As example for the numerical values to use in the abovementioned equation, see as example es. Bremer, H., and K. Wendland. *Heterogene Katalyse.* Berlin: Academie-Verlag, 1981. or as alternative U.S. Patent. 5,591,414; Jacob, Eberhard, et al., Jan. 7, 1997; "Sorptive catalyst for the sorptive and oxidative cleaning of exhaust gases from diesel engines"; MAN Nutzfahrzeuge Aktiengesellschaft. According to the equation the main problem is the correct control of temperature and contact area between gas and solid catalyst. It is possible to use system of economic catalyst or catalyst designed from noble metals that use specific transition metals, see as example U.S. Patent. 5,591,414: Jacob, Eberhard, et al.; Jan. 7, 1997; "Sorptive catalyst for the sorptive and oxidative cleaning of exhaust gases from diesel engines"; MAN Nutzfahrzeuge Aktiengesellschaft.

These catalyst typologies using noble metals allow for a lower exhaust temperature and thus allow less energy consumption and lower realization cost for the components constituting apparatus 12. A great variety of solutions are known to realize catalysts with different materials and realization processes to increase conversion efficiency, in every case they requires an accurate control of working temperature since at low temperature they do not eliminate and/or reduce all pollutants of gaseous type and sometimes they deactivate the substrate. In case of exhaust at low temperature, such as those generated in civil buildings, it is mandatory to control temperature and pressure. The temperature is controlled- for abovementioned behavior, the pressure in order to reestablish pressure losses and preserve combustion. These pressure losses are due to catalyst and filters.

Device 22 for the automatic regulation of exhaust temperature includes at least a metallic element inside duct 19, an induction coil connected to a power supply unit. The characteristic of these metallic elements is to have a predefined Curiè point predefined according to the optimal operating point of the catalytic filter 23. The induction coil is realized in such a way that it conducts alternate current until the metallic elements reaches their Couriè point over this temperature the system do not induces current since they loose the magnetic properties. If exhaust are at an higher temperature than that required by the catalyst the system is naturally inactive and do not absorb current.

A first representation of the apparatus 12 shown in figure 2 the second duct 19 includes in the order from the inlet 16 to the outlet 17 the flow control device 24, the solid particle filter 20, the device 21 operatively connected to flow control device 24 to preserve exhaust pressure in duct 19 within predefined operating conditions, exhaust temperature control device 22 and a catalytic filter 23 for gaseous pollutants

A second representation of the apparatus 12 shown in figure 3 the second duct 19 includes in the order from the inlet 16 to the outlet 17 the flow control device 24, the exhaust temperature control device 22, the solid particle filter 20, the device 21 operatively connected to flow control device 24 to preserve exhaust pressure in duct 19 within predefined operating conditions, and a catalytic filter 23 for gaseous pollutants.

A third representation of the apparatus 12 shown in figure 4 the second duct 19 includes in the order from the inlet 16 to the outlet 17 the flow control device 24, the exhaust temperature control device 22, the solid particle filter 20, a catalytic filter 23 for gaseous pollutants, the device 21 operatively connected to flow control device 24 to preserve exhaust pressure in duct 19 within predefined operating conditions.

In a further representation, not shown here, the automatic temperature control device could be integrated in device 21.

In a possible variant of the abovementioned configurations and not shown in figures a further flow control device 26 is inserted along duct 19, before outlet 17 and after filter 20 and after filter 22. The device of flow control 26 is able to stop exhaust short-circuiting and/or up streaming flow return through duct 18.

The apparatus 12 could be physically assembled in different configurations and with component order different from those described leaving intact the object of the present invention.

The apparatus 12 could be advantageously connected to the extreme end of the fixed exhaust duct in such a way to simplify at the maximum installation for pre-existing heating units.

In use, in relation to the first configuration shown in figure 2, exhausts produced by fuel combustion 7 inside the combustion chamber 5 are guided along direction duct 2 to the apparatus 12. With the apparatus 12 in operation, the exhausts are directed in duct 19 by the flow control device 24 and directed to the filter 20 where solid pollutants filtering take places. In the filter 20 the particle separation take place thus producing a mass loss in the flux that produces a pressure loss. Furthermore the flow diversion through the catalyst, filter 23 could be in certain configuration a catalyst cartridge, produces pressure losses not acceptable for building combustion systems; it is required to introduce an element to reestablish the circuit pressure in such a way to allow exhaust to be released in the atmosphere. In order to maintain the pressure at a constant level inside duct 19 a device 21 is operatively connected to the flow control device 24. Flow control device 24 allows exhaust to pass-through device 12 according to the exhaust quantity produced by combustion chamber 5 decoupling exhaust pressure from duct 19 from exhaust pressure of first part 10 of vertical duct 2. In the configuration including the flow control device 26 such a decoupling is realized even between duct part 19 and second part 11. The device 21 is realized in such a way to establish pressure within a predefined operating range, such a range corresponding to filter 23 optimal ranges.

One of the proposed solution for the present method uses a low revolution piston compressor having two advantages, having an exhaust pressure sufficient to pass through the catalyst, in the inlet or outlet having enough energy to generate particle separation according to abovementioned method and increase temperature due to mechanical work. Usually temperature increase due to gas compression is a disadvantage; in this particular application it is an innovation advantage of the present solution.

Nevertheless the adopted solution employs a centrifugal compressor with specific design solution for interfacing and a mechanical connection device able to decouple thermally the electric motor from the compressor wheel. This aspect is uncommon since products available in the market to pump hot gasses (i.e. 200-300 and 400 °C, too) are of axial type or not in direct connection and thus are more costly and failures are more frequents.

Typically filter 23 works with optimal pressure and optimal temperature so that exhaust are heated or cooled through device 22 for the exhaust temperature automatic setting. The device 22 could be located in any place along duct 19 while it is able to set the optimal operating temperature both for filter 23 and/or filter 20. This working temperature is typically between 100 and 600 degrees °C in an optimal solution this working temperature is between 100 and 300 °C. In particular in the following conditions the temperature is between 160 and 210 °C (preferably equal to 200 °C):

- Introduction of a rhodium components to the catalyst material increases pollutants reduction especially for nitrogen oxides even at low temperature near the catalyst,

- Pressure difference among the catalyst is between 70 and 120 mmH$_2$O,

- Mean exhaust speed is between 1.2 e 1.6 m/s.

These conditions permits to avoid introduction of device 22.

Inside filter 23, in a device 12 alternative configuration including catalyst as filter 23, catalytic reaction could take place and the exhaust composition varies as described before with a small mass reduction. Exhaust are at this point guided through outlet 17 in the second half of duct 11 ant released in the atmosphere.

In emergency or during apparatus 12 maintenance it is possible to activate the flow regulator 24 in order to direct completely through duct 18 and thus allows the thermo-regulator to work even in case of failure apparatus 12, it allow to substitute some components or the cleaning of filter 20 and/or filter 23.

It is essential to use a simple and reliable device not to interrupt the accidentally the flow but inserted in the flow stream in order not to interfere in case of flow interruption in the duct, see for U.S. Patent. 4,080,981; Stewart; Mar. 28, 1978; "Antisiphon check valve."

An advantage of the invention is that it is well suited for the conversion of old exhaust duct systems since these are typically assembled by rectilinear long duct segments in order to form a exhaust fixed duct that guides exhaust outside, especially in the part near the emission and in the part of atmosphere dilution.

A further advantage of the present invention is that the apparatus and the method include a device able to recover the pressure loss with an easiest of installation. The use of a centrifugal system allows to have higher pressure increase trough the fan and to allow both orthogonal and axial mounting with great flexibility for the system.

A further advantage of the present invention is the adaptability to any mounting position along the exhaust duct; as example it is possible to realize the system inside the heating unit inserting the catalytic system and the fine cell filter or the conic separator directly at the inlet or inside the heater exhaust pipes substituting some or all the heat exchange improving devices (often called "vortex generator").

The device described in the present invention could advantageously adopt a signalling device to signal maintenance need or a system malfunction, this aspect could be realized by connecting the signalling device at the end of the duct 4 or near the end 15.

A modular experimental apparatus was realized according to the characteristics of the present invention including:

- a catalyst device ready to install after the exhaust duct of the heater,

- a mechanical filter to collect and surface burn particles having cell size of 0,8-1,2 mm,

- a re-heating unit outside and before the catalyst inlet for the catalyst preheating,

- a fan compressor to recover pressure losses,

- an electrical cabinet for pressure and temperature measure and control at specific duct section of the exhaust duct,

The plant was realized according to Norms UNI EN 304: 1994" Caldaie per riscaldamento: regola di prova per caldaie con bruciatori di olio combustibile a polverizzazione" and the exhaust specimens, the tests were executed according to methods and description of the following list: UNICHIM 467, UNICHIM 542, UNICHIM 494, UNICHIM 543, D.M. 25/08/2000.

The combustion heater had a nominal power of 35 kW running a burner having 3kg/h maximum fuel flow. The outlet water temperature was 80 °C with a pressure difference between inlet and outlet of 12 °C.

Environment air temperature was about 30 °C and combustion air temperature was about 29 °C with a fuel consumption of 2,265 kg/h.

The pressure relative to ambient at the heater exhaust exit was regulated through the fan at 20,1 [Pa] with an outlet exhaust temperature of about 140 °C and an inlet exhaust temperature of about 296 °C. The run lasted for about 3 hours. The apparatus gave following advantages, it was settled to maximal carbon oxide reduction through modularity and function regulations:

| Parameter | Meas. Units | Device Inlet | Device Outlet | Percentage Variation |
|---|---|---|---|---|
| Particles | mg/Nm$^3$ | 6,2 | 3,0 | **-51,6** |
| Particles < 10 micron PM10 | mg/Nm$^3$ | 3,1 | 1,2 | **-61,3** |
| Carbon Oxide | mg/Nm$^3$ | 85,0 | 1,3 | **-98,5** |
| Organic Substance (Carbon equivalence) | mg/Nm$^3$ | 19,8 | 6,4 | **-67,7** |
| Sulphur Oxides (SO equivalence)$_2$ | mg/Nm$^3$ | 20,2 | 9,7 | **-52,0** |
| Nitrogen Oxides (NO equivalence)$_2$ | mg/Nm$^3$ | 100,6 | 58,5 | **-41,8** |

**Claims**

1. Method to reduce and/or eliminate pollutants in exhaust produced by combustion thermal generators for civil buildings comprising at least a combustion chamber (5) and at least a fixed exhaust duct (2) to direct exhaust from inside combustion chamber to outside combustion chamber comprising the phases of

   - setting the pressure of said exhausts within a predefined range;
   - separating the exhaust gaseous pollutants;
   - separating particles pollutants through a metallic network filter, wires, strands, coils or porous mechanically acting to stop particles;
   - setting metallic element temperature to such a value as to ignite combustion or decomposition of particles or pollutants in basic elements;

   **characterized in that** it includes the further phases of:

   - providing a first and a second duct (18,19) to be connected in parallel to said fixed exhaust duct;
   - directing the exhausts to flow alternatively through said first duct (18) or said second duct (19), said phases of setting pressure and temperature and phases of separating gaseous and particles pollutants taking place only in said second duct (19).

2. Method according to claim 1, **characterized in that** said gaseous pollutants separating phase inside at least said section of fixed exhaust duct is realized through a three-way catalyst.

3. Method according to claim 1, **characterized in that** said gaseous pollutants separating phase inside at least said section of fixed exhaust duct is realized through an automotive commonly used catalyst.

4. Method according to claims 1, 2, or 3 **characterized in that** said pressure setting, in at least a section of said fixed exhaust duct, said pressure of exhaust within a range of predefined values is realized increasing pressure of said exhausts.

5. Method according to claim 4 **characterized in that** said pressure setting, in at least a section of said fixed exhaust duct, said pressure of exhaust within a range of predefined values is realized using a pressurizing device.

6. Method according to claim 1 **characterized in that** said gaseous pollutants separating phase inside said at least fixed exhaust duct section is realized through a water volume able to generate gases through chemical decomposition or electrolysis included in at least one section of said fixed exhaust duct introducing at least a chemical recant or an electrolyte in said water volume.

7. Method according to claim 6 **characterized in that** includes a further phase of generating hydrogen inside said water volume by applying to said water volume a proper electric current value; separating pollutants reacting exhausts with hydrogen on a catalyst.

8. Apparatus to reduce and/or eliminate pollutants in exhausts from combustion thermal generators (1) for civil buildings comprising at least a combustion chamber (5) and at least a' fixed exhaust duct (2) able to direct said exhausts from inside to outside of combustion chamber (5) including first means (21,24) to set the pressure of said exhausts within a predefined range, second means (23) to separate gaseous pollutants and third means (20) to separate particulates pollutants, said third means (20) comprising a metallic network filter, wires, strands, coils or porous and mechanically acting to stop particles, **characterized in that** it includes a first and a second duct (18,19) to be connected in parallel to said fixed exhaust duct (2) and **characterized in that** said first means comprise a flow regulator(24) in order to direct the exhausts to flow alternatively through first duct (18) or second duct (19), said second means (23) and third means (20) being arranged in said second duct (19).

9. Apparatus according to claim 8 **characterized in that** said second means (23) comprises a three-way catalyst.

10. Apparatus according to claims 8 or 9 **characterized in that** said second means (23) comprises a water volume able to generate gases through chemical decomposition or electrolysis included in at least one section of said fixed exhaust duct introducing at least a chemical recant or an electrolyte in said water volume.

11. Apparatus according to claims 8, 9 or 10 **characterized in that** said third means (20) realizing a pressure increase of said exhaust.

12. Apparatus according to claims 8, 9, 10 or 11 **characterized in that** said second means (23) comprise a catalyst of the type commonly used for automotive field.

13. Apparatus according to claims from 8 to 12 **characterized in that** said first means (21,24) comprises a pressurizing unit.

14. Apparatus according to claims from 8 to 13 **characterized in that** said first means (21,24), second means (23) and third means (20) are settable in any position along said fixed exhaust duct independently.

15. Apparatus according to claims from 8 to 14 **characterized in that** said first means (21,24), second means (23) and third means (20) are modular.

16. Apparatus according to claims from 8 to 15 **characterized in that** said first means (21,24), second means (23) and third means (20) are functionally independent each to other.

17. Apparatus according to claims from 8 to 16 **characterized in that** comprises a electric control unit (25) of said first means (21,24), second means (23) and third means (20).

18. Apparatus according to claims from 8 to 17 **characterized in that** comprises a signalling device able to signal failures of said first means (21,24), second means (23) or third means (20).

**Patentansprüche**

1. Verfahren zum Reduzieren und/oder Abscheiden von Schadstoffen aus der durch thermische Verbrennungsgeneratoren in Wohngebäuden erzeugten Abluft, mit mindestens einer Verbrennungskammer (5) und mindestens einem feststehenden Abluftkamin (2), der die Abluft von der inseitigen Verbrennungskammer nach außen leitet, umfassend die Schritte

   - Einstellen des Abluftdruckes innerhalb eines vorgegebenen Bereichs;
   - Abscheiden von gasförmigen Schadstoffen aus der Abluft;
   - Abscheiden von Schadstoffpartikeln durch ein metallisches Netzwerkfilter, Drähte, Drahtsträngen, Spulen oder eine poröse mechanische Einrichtung zum Anhalten der Partikel;
   - Einstellen der Temperatur eines metallischen Elements auf einen Wert zum Zünden der Verbrennung oder zum Zersetzen der Partikel oder der Schadstoffe in Basiselemente,

   **dadurch gekennzeichnet, dass** in weiteren Schritten

   - ein erster und ein zweiter Kamin (18, 19) parallel an den feststehenden Abluftkamin angeschlossen sind,
   - die Abluft wahlweise durch den ersten Kamin (18) oder den zweiten Kamin (19) geleitet wird; und die Verfahrensmaßnahmen des Einstellens von Druck und Temperatur und zum Abscheiden der gasförmigen und der Partikelschadstoffe nur im zweiten Kamin (19) vorgenommen werden.

2. Verfahren nach Anspruch 1, **dadurch gekennzeichnet, dass** das Abscheiden der gasförmigen Schadstoffe inseitig zumindest in einem Abschnitt des feststehenden Abluftkamins mittels eines 3-Wegekatalysators erfolgt.

3. Verfahren nach Anspruch 1, **dadurch gekennzeichnet, dass** das Abscheiden der gasförmigen Schadstoffe inseitig zumindest in einem Abschnitt des feststehenden Abluftkamins durch einen herkömmlichen Kraftfahrzeugkatalysator vorgenommen wird.

4. Verfahren nach Anspruch 1, 2 oder 3, **dadurch gekennzeichnet, dass** durch die Druckeinstellung innerhalb eines Bereichs von vorgegebenen Werten in zumindest einem Abschnitt des feststehenden Abluftkamins ein ansteigender Druck der Abluft realisiert wird.

5. Verfahren nach Anspruch 4, **dadurch gekennzeichnet, dass** eine Druckerzeugungs-einrichtung für die Druckeinstellung in zumindest einem Abschnitt des feststehenden Abluftkamins innerhalb eines Bereichs von vorgegebenen Werten vorgesehen wird.

6. Verfahren nach Anspruch 1, **dadurch gekennzeichnet, dass** das Abscheiden der gasförmigen Schadstoffe inseitig in zumindest einem Abschnitt des feststehenden Abluftkamins in einem Wasservolumen erfolgt, in welchem Gase durch chemische Zersetzung oder Elektrolyse in zumindest einem Abschnitt des feststehenden Abluftkamins erzeugt werden, indem zumindest ein chemischer Reaktant oder ein Elektrolyt in das Wasservolumen eingeleitet wird.

7. Verfahren nach Anspruch 6, **dadurch gekennzeichnet, dass** in einem weiteren Schritt in dem Wasservolumen Wasserstoff erzeugt wird, indem geeigneter elektrischer Strom an das Wasservolumen angelegt wird, und dass Schadstoffe abgetrennt werden, wenn die Abluft mit dem Wasserstoff an einem Katalysator reagiert.

8. Anlage zum Reduzieren und/oder Abscheiden von Schadstoffen aus der durch thermische Verbrennungsgeneratoren (1) in Wohngebäuden erzeugte Abluft, mit mindestens einer Verbrennungskammer (5) und mindestens einem feststehenden Abluftkamin (2), der die Abluft von der inseitigen Verbrennungskammer (5) nach außen leitet, mit ersten Mitteln (21, 24) zum Einstellen des Abluftdruckes innerhalb eines vorgegebenen Bereichs, einem zweiten Mittel (23) zum Abscheiden gasförmiger Schadstoffe und einem dritten Mittel (20) zum Abscheiden von Schadstoffpartikeln, wobei das dritte Mittel (20) aus einem metallischen Netzwerkfilter, Drähten, Drahtsträngen, Spulen oder einer porösen mechanischen Einrichtung zum Anhalten der Partikel besteht, **dadurch gekennzeichnet, dass** ein erster und zweiter Kamin (18, 19) parallel an den feststehenden Abluftkamin (2) angeschlossen sind, dass die ersten Mittel einen Durchflussregler (24) umfassen, der die Abluft wahlweise durch den ersten Kamin (18) oder den zweiten Kamin (19) leitet und dass das zweite Mittel (23) und das dritte Mittel (20) in dem zweiten Kamin (19) angeordnet sind.

9. Anlage nach Anspruch 8, **dadurch gekennzeichnet, dass** das zweite Mittel (23) einen 3-Wegekatalysator umfasst.

**10.** Anlage nach Anspruch 8 oder 9, **dadurch gekennzeichnet, dass** das zweite Mittel (23) ein Wasservolumen umfasst, das geeignet ist Gase durch chemische Zersetzung oder Elektrolyse zu erzeugen, indem zumindest ein chemischer Reaktant oder ein Elektrolyt in das Wasservolumen eingeleitet wird, das sich zumindest in einem Abschnitt des feststehenden Abluftkamins befindet.

**11.** Anlage nach Anspruch 8, 9 oder 10, **dadurch gekennzeichnet, dass** das dritte Mittel (20) einen Druckanstieg der Abluft hervorruft.

**12.** Anlage nach Anspruch 8, 9 , 10 oder 11, **dadurch gekennzeichnet, dass** es sich bei dem Katalysator um einen herkömmlichen Kraftfahrzeugkatalysator handelt.

**13.** Anlage nach den Ansprüchen 8 bis 12, **dadurch gekennzeichnet, dass** die ersten Mittel (21, 24) eine Druckerzeugungseinrichtung (21) umfassen.

**14.** Anlage nach den Ansprüchen 8 bis 13, **dadurch gekennzeichnet, dass** die ersten Mittel (21, 24), das zweite Mittel (23) und das dritte Mittel (20) in jeder Position entlang dem feststehenden Abluftkamin unabhängig festlegbar sind.

**15.** Anlage nach den Ansprüchen 8 bis 14, **dadurch gekennzeichnet, dass** die ersten Mittel (21, 24), das zweite Mittel (23) und das dritte Mittel (20) modular ausgestaltet sind.

**16.** Anlage nach den Ansprüchen 8 bis 15, **dadurch gekennzeichnet, dass** die ersten Mittel (21, 24), das zweite Mittel (23) und das dritte Mittel (20) voneinander funktionell unabhängig sind.

**17.** Anlage nach den Ansprüchen 8 bis 16, **dadurch gekennzeichnet, dass** ein elektrisches Steuergerät (25) für die ersten Mittel (21, 24), das zweite Mittel (23) und das dritte Mittel (20) vorhanden ist.

**18.** Anlage nach den Ansprüchen 8 bis 17, **dadurch gekennzeichnet, dass** eine Anzeigeeinrichtung für die Anzeige von Ausfällen der ersten Mittel (21, 24), des zweiten Mittels (23) und des dritten Mittels (20) vorhanden ist.

**Revendications**

**1.** Procédé de réduction et/ou d'élimination des rejets polluants dans le gaz d'échappement produit par les générateurs thermiques à combustion pour les bâtiments civils, comprenant au moins une chambre de combustion (5) et au moins un conduit d'échappement fixe (2) pour diriger le gaz d'échappement de l'intérieur de la chambre de combustion vers l'extérieur de la chambre de combustion, comprenant les phases suivantes :

- régler la pression desdits gaz d'échappement dans une plage prédéfinie ;
- séparer les polluants gazeux d'échappement ;
- séparer les polluants particulaires par l'intermédiaire d'un filtre réseau métallique, de câbles, fils, bobines ou dispositifs poreux agissant mécaniquement pour arrêter les particules ;
- régler la température des éléments métalliques à une valeur telle qu'elle initie la combustion ou la décomposition des particules de polluants dans les éléments de base ;

**caractérisé en ce qu'**il comprend en outre les phases suivantes :

- fournir un premier et d'un second conduits (18, 19) à raccorder en parallèle audit conduit d'échappement fixe ;
- orienter les gaz d'échappement afin qu'ils s'écoulent alternativement par ledit premier conduit (18) ou ledit second conduit (19), lesdites phases de réglage de la pression et de la température et phases de séparation des polluants gazeux et particulaires ayant lieu uniquement dans ledit second conduit (19).

**2.** Procédé selon la revendication 1, **caractérisé en ce que** ladite phase de séparation des polluants gazeux à l'intérieur d'au moins ladite section de conduit d'échappement fixe est réalisée au moyen d'un catalyseur trifonctionnel.

**3.** Procédé selon la revendication 1, **caractérisé en ce que** ladite phase de séparation des polluants gazeux à l'intérieur d'au moins ladite section de conduit d'échappement fixe est réalisée au moyen d'un catalyseur d'automobile communément utilisé.

**4.** Procédé selon les revendications 1, 2 ou 3, **caractérisé en ce que** ledit réglage de la pression, dans au moins une section dudit conduit d'échappement fixe, de ladite pression des gaz d'échappement dans une plage de valeurs prédéfinies est réalisé en augmentant la pression desdits gaz d'échappement.

**5.** Procédé selon la revendication 4, **caractérisé en ce que** ledit réglage, dans au moins une section dudit conduit d'échappement fixe, de ladite pression des gaz d'échappement dans une plage de valeurs prédéfinies est réalisé en utilisant un dispositif de pressurisation.

**6.** Procédé selon la revendication 1, **caractérisé en ce que** ladite phase de séparation des polluants gazeux à l'intérieur d'au moins ladite section de conduit d'échappement fixe est réalisée par l'intermédiaire d'un volume d'eau capable de produire des gaz par décomposition chimique ou par électrolyse compris dans au moins une section dudit conduit d'échappement fixe en introduisant au moins un réactif chimique ou un électrolyte dans ledit volume d'eau.

**7.** Procédé selon la revendication 6, **caractérisé en ce qu'**il comprend en outre une phase de génération d'hydrogène à l'intérieur dudit volume d'eau en appliquant audit volume d'eau une valeur appropriée de courant électrique ; de séparation des gaz d'échappement réagissant aux polluants au moyen d'hydrogène sur un catalyseur.

**8.** Appareil de réduction et/ou d'élimination des rejets polluants dans les gaz d'échappement provenant des générateurs thermiques à combustion (1) pour les bâtiments civils, comprenant au moins une chambre de combustion (5) et au moins un conduit d'échappement fixe (2) capable de diriger le gaz d'échappement de l'intérieur à l'extérieur de la chambre de combustion (5), comprenant des premiers moyens (21, 24) destinés à régler la pression desdits gaz d'échappement dans une plage prédéfinie, des deuxièmes moyens (23) destinés à séparer les polluants gazeux et des troisièmes moyens (20) destinés à séparer les polluants particulaires, comprenant un filtre réseau métallique, des câbles, des fils, des bobines ou des dispositifs poreux agissant mécaniquement pour arrêter les particules, **caractérisé en ce qu'**il comprend un premier et un second conduits (18, 19) à raccorder en parallèle audit conduit d'échappement fixe (2) et **caractérisé en ce que** lesdits premiers moyens comprennent un régulateur de débit (24) pour orienter les gaz d'échappement afin qu'ils s'écoulent alternativement par le premier conduit (18) ou le second conduit (19), lesdits deuxièmes moyens (23) et troisièmes moyens (20) étant disposés dans ledit second conduit (19).

**9.** Appareil selon la revendication 8, **caractérisé en ce que** lesdits deuxièmes moyens (23) comprennent un catalyseur trifonctionnel.

**10.** Appareil selon la revendication 8 ou 9, **caractérisé en ce que** lesdits deuxièmes moyens (23) comprennent un volume d'eau capable de générer des gaz par décomposition chimique ou électrolyse compris dans au moins une section dudit conduit d'échappement fixe en introduisant au moins un réactif chimique ou un électrolyte dans ledit volume d'eau.

**11.** Appareil selon les revendications 8, 9 ou 10, **caractérisé en ce que** lesdits troisièmes moyens (20) effectuent une augmentation de la pression desdits gaz d'échappement.

**12.** Appareil selon les revendications 8, 9, 10 ou 11, **caractérisé en ce que** lesdits deuxièmes moyens (23) comprennent un catalyseur du type communément utilisé dans les véhicules.

**13.** Appareil selon les revendications 8 à 12, **caractérisé en ce que** lesdits premiers moyens (21, 24) comprennent une unité de pressurisation.

**14.** Appareil selon les revendications 8 à 13, **caractérisé en ce que** lesdits premiers moyens (21, 24), deuxièmes moyens (23) et troisièmes moyens (20) sont réglables indépendamment dans n'importe quelle position le long dudit conduit d'échappement fixe.

**15.** Appareil selon les revendications 8 à 14, **caractérisé en ce que** lesdits premiers moyens (21, 24), deuxièmes moyens (23) et troisièmes moyens (20) sont modulaires.

**16.** Appareil selon les revendications 8 à 15, **caractérisé en ce que** lesdits premiers moyens (21, 24), deuxièmes moyens (23) et troisièmes moyens (20) sont fonctionnellement indépendants les uns des autres.

**17.** Appareil selon les revendications 8 à 16, **caractérisé en ce qu'**il comprend une unité de commande électrique (25) desdits premiers moyens (21, 24), deuxièmes moyens (23) et troisièmes moyens (20).

**18.** Appareil selon les revendications 8 à 17, **caractérisé en ce qu'**il comprend un dispositif de signalisation capable de signaler des défaillances desdits premiers moyens (21, 24), deuxièmes moyens (23) et troisièmes moyens (20).

Fig. 3

Fig. 2

Fig. 4

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5879645 A
- DE 19627028 A
- US 4895707 A
- US 5294002 A
- US 5085783 A
- US 5591414 A
- US 4080981 A